(19) Europäisches Patentamt / European Patent Office / Office européen des brevets

(11) **EP 2 999 677 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(51) Int Cl.:
*C04B 35/52* *(2006.01)*   *C04B 35/01* *(2006.01)*
*C04B 35/03* *(2006.01)*   *C04B 35/043* *(2006.01)*

(21) Anmeldenummer: **14722162.6**

(22) Anmeldetag: **30.04.2014**

(86) Internationale Anmeldenummer:
**PCT/EP2014/058854**

(87) Internationale Veröffentlichungsnummer:
**WO 2014/187653 (27.11.2014 Gazette 2014/48)**

(54) **VERFAHREN ZUR REDUZIERUNG DER REVERSIBLEN WÄRMEDEHNUNG EINES GRAPHITHALTIGEN FEUERFESTEN GEFORMTEN ERZEUGNISSES**

PROCESS FOR THE REDUCTION OF THE REVERSIBLE EXPANSION OF A GRAPHITE CONTAINING REFRACTORY FORMED OBJECT

PROCEDE DE REDUCTION DE LA DILATATION REVERSIBLE D'UN OBJET REFRACTAIRE CONTENANT DU GRAPHITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2013 DE 102013008855**

(43) Veröffentlichungstag der Anmeldung:
**30.03.2016 Patentblatt 2016/13**

(73) Patentinhaber: **Refratechnik Holding GmbH**
**80807 München (DE)**

(72) Erfinder:
• **JANSEN, Helge**
**37133 Friedland (DE)**
• **ANEZIRIS, Christos**
**09599 Freiberg (DE)**
• **STEIN, Petra**
**37079 Göttingen (DE)**

(74) Vertreter: **Dr. Solf & Zapf**
**Patent- und Rechtsanwalts PartG mbB**
**Candidplatz 15**
**81543 München (DE)**

(56) Entgegenhaltungen:
**WO-A1-2011/125536     FR-A1- 2 542 309**

• **P.P. MAGAMPA ET AL: "Properties of graphite composites based on natural and synthetic graphite powders and a phenolic novolac binder", JOURNAL OF NUCLEAR MATERIALS, vol. 436, no. 1-3, 4 February 2013 (2013-02-04), pages 76-83, XP055157848, ISSN: 0022-3115, DOI: 10.1016/j.jnucmat.2013.01.315**

Bemerkungen:
Die Akte enthält technische Angaben, die nach dem Eingang der Anmeldung eingereicht wurden und die nicht in dieser Patentschrift enthalten sind.

EP 2 999 677 B1

**Beschreibung**

Die Erfindung betrifft ein Verfahren zur Reduzierung der reversiblen Wärmedehnung eines geformten Graphit haltigen, insbesondere Naturgraphit haltigen, keramisch gebrannten oder ungebrannten feuerfesten Erzeugnisses.

Graphit haltige geformte, gebrannte oder ungebrannte feuerfeste Erzeugnisse enthalten i. d. R. natürlichen Flockengraphit. Man unterscheidet dabei zwischen graphithaltigen Erzeugnissen auf Basis nicht basischer Werkstoff-granulate wie Schamotte, Graphit-, $Al_2O_3$-C-, $ZrO_2$-C-Werkstoffgranulate und graphithaltigen Erzeugnissen auf Basis basischer Werkstoffgranulate wie MgO oder AMC. Die Granulate der geformten feuerfesten Erzeugnisse sind über an sich bekannte Bindemittel und/oder eine keramische Bindung zu einem Verbund verfestigt.

Weit verbreitet sind Graphit haltige, Spinell bildende Alumina-Magnesia-Kohlenstoffsteine (AMC-Steine) mit Graphitgehalten z. B. bis 25 Gew.-%. Ebenso weit verbreitet sind kohlenstoffgebundene Graphit haltige Magnesiacarbonsteine (MgO-C-Steine) mit Graphitgehalten z. B. bis 25 Gew.-%.

Flockengraphit, der üblicherweise in Graphit haltigen feuerfesten Erzeugnissen eingesetzt wird (im Folgenden auch nur Graphit genannt) verleiht den feuerfesten Erzeugnissen z. B. Minderung eines in Folge von z. B. Schlackeninfiltration auftretenden Verschleißes, Verbesserung der Temperaturwechselbeständigkeit durch Erhöhung der Wärmeleitfähigkeit und Absenkung der reversiblen Wärmedehnung bei wechselnden Temperaturen (Temperaturerhöhungen und Temperaturabsenkungen) und wirkt als Presshilfsmittel beim Pressen der geformten feuerfesten Erzeugnisse.

Graphit hat eine hexagonale Struktur und besteht aus einer Abfolge verschiedener Schichten, den sogenannten Graphenlagen, die sich in einer ab-Ebene ausbreiten, und in c-Richtung übereinander angeordnet sind und dabei nur durch schwache Van der Waalsche-Wechselwirkungen zusammengehalten werden.

Die Dichte des Graphits schwankt sehr stark in Abhängigkeit von Herkunft (Lagerstätte) und Zerkleinerungsgrad. Bedingt durch die Schichtstruktur sind einige Eigenschaften von Graphit stark richtungsabhängig wie die elektrische Leitfähigkeit, die Wärmeleitfähigkeit und mechanische Eigenschaften.

Ein besonderer Nachteil des Graphits ist seine geringe Oxidationsbeständigkeit. Sie nimmt mit zunehmender Kristallinität des Kohlenstoffmaterials zu.

In Graphit haltigen feuerfesten Erzeugnissen wie z. B. in Graphit haltigen MgO-C-Steinen wird hauptsächlich Naturgraphit, und zwar i. d. R. mit Korngrößen z. B. zwischen > 200 $\mu$m und < 500 $\mu$m und Kohlenstoffgehalten z. B. zwischen 85 und 99 Gew.-% verwendet. Naturprodukte sind lagerstättenbedingt unterschiedlich, insbesondere bezüglich ihrer Rohstoffqualität wie Reinheit und Kristallgröße. Als Gütekriterien gelten u. a. Kristallgrößen und Korngrößenverteilung.

Wenn im Folgenden die Rede ist von reversibler Wärmedehnung, ist gleichermaßen der Wärmeausdehnungs-koeffizient $\alpha$ gemeint, der die reversible Wärmedehnung kennzeichnet. Nicht gemeint ist die irreversible Dehnung und die irreversible Schwindung, sondern die Dehnung bei Temperaturerhöhung, die bei Temperaturerniedrigung wieder gleichermaßen zurückgeht.

Die unterschiedlichen feuerfesten Werkstoffe weisen unterschiedliche reversible Wärmedehnungen auf in einem Temperaturbereich, dem sie in situ, d. h. in einer feuerfesten Auskleidung eines Industrieaggregats, unterworfen sind.

In vielen Anwendungsfällen von geformten feuerfesten Erzeugnissen aus feuerfesten Werkstoffgranulaten, bei denen das feuerfeste Erzeugnis hohen Temperaturen und häufigen Temperaturwechseln unterworfen ist, z. B. in einem Industrieaggregat wie einem Konverter oder einer Pfanne oder einem Elektroofen stört eine hohe reversible Wärmedehnung bzw. ein hoher Wärmeausdehnungskoeffizient, weil dadurch Gefügespannungen verursacht werden, die zu Abplatzungen und Rissbildungen führen können, die zumindest eine Reparatur der Auskleidung erfordern.

Zum Beispiel ist bekannt, dass Magnesiasteine (MgO-Steine) im Vergleich zu Graphit enthaltenden Magnesia-Kohlenstoff-Steinen (MgO-C-Steinen) eine relativ hohe reversible Wärmedehnung aufweisen und dass die reversible Wärmedehnung von MgO-C-Steinen geringer ausfällt, je mehr Graphit enthalten ist. Bedingt ist das durch die weitaus geringere reversible Wärmedehnung des Graphits im Vergleich zur reversiblen Wärmedehnung des MgO. Gleichwohl liegt die reversible Wärmedehnung auch bei MgO-C-Steinen noch so hoch, dass in feuerfesten Auskleidungen, z. B. in einer Pfanne, Dehnfugen vorgesehen werden müssen, die bei der Erstellung der feuerfesten Auskleidung mit ausbrennbarem Material, z. B. mit sogenannter Dehnfugenpappe, ausgefüllt werden.

Bekannt ist auch, dass die mechanischen Eigenschaften von MgO-C-Steinen vom Graphitgehalt abhängig sind. Zum Beispiel hat die relative Dichte ein Maximum bei 15 Vol.-% Graphit. Die Festigkeiten, der E-Modul und die Bruchzähigkeit zeigen ein Maximum bei etwa 5 Vol.-% Graphit. Andererseits nimmt die reversible Wärmedehnung mit steigendem Graphitgehalt ab. Insofern ist eine Optimierung von Eigenschaften nicht unproblematisch.

Schließlich ist berichtet worden, dass die Graphitflockengröße einen Einfluss auf die reversible Wärmedehnung hat, wobei diese thermische Dehnung mit geringer werdender Graphitflockengröße abnimmt (Sakaguchi Masayuki et al.: Effect of Graphite Particle Size On Properties Of MgO-C-Bricks, Taikabutsu Overseas Vol. 13 [1] (1993), Seiten 27-29). Der oben beschriebene Einfluss des Graphits bei MgO-C-Steinen ergibt sich auch bei geformten feuerfesten Erzeugnissen aus anderen basischen oder nicht basischen feuerfesten Werkstoffgranulaten.

Gemäß der FR 2 542 309 A1 werden zwei verschiedene Flockengraphitsorten (A und B) verwendet. Aus den angegebenen Korngrößen lässt sich ein $d_{12}$-Wert für die Graphitsorte A ermitteln. Dieser beträgt 0,21 mm. Für die Graphitsorte B lässt sich kein dx-Wert ermitteln. Hierzu fehlen die notwendigen Angaben. Die Dicke eines Flockens der Graphitsorte A beträgt 7 $\mu$m und die Dicke eines Flockens der Graphitsorte B beträgt 21 $\mu$m.

Die WO 2011/125536 A1 offenbart Gemische von unterschiedlichen Flockengraphitsorten. Sie befasst sich damit, Festigkeitsunterschiede und den Rissfortschritt zu minimieren. Zudem soll der Unterschied des "average aspect ratio" der beiden Graphitsorten möglichst gering sein. Der "average aspect ratio" ergibt sich aus der Division der mittleren Korngröße [$\mu$m] (=$d_{50}$-Wert) durch die mittlere Dicke [$\mu$m]. Insbesondere soll der "average aspect ratio" zwischen 5 und 12 liegen, was immer einen Unterschied < 10 ergibt.

Der Artikel "Properties of graphite composites based on natural and synthetic graphite powders and a phenolic novolac binder" (Journal of Nuclear Materials 436 (2013) 76-83) befasst sich mit der Mischung von zwei Graphitsorten, von die eine flockenartig und die andere nadelartig ist. In dem Artikel sind keinerlei Kornverteilungen der beiden Graphitsorten angegeben.

Aufgabe der Erfindung ist, die reversible Wärmedehnung bzw. den Wärmeausdehnungskoeffizienten (WAK) von Graphit haltigen feuerfesten geformten Erzeugnissen unter Beibehaltung der gleichen Graphitmenge im Erzeugnis zu senken, und damit die Temperaturwechselbeständigkeit zu verbessern, wobei diese gewollte Eigenschaftsänderung nicht zu Änderungen, insbesondere Verschlechterungen, der weiteren ursprünglichen Werkstoffeigenschaften wie Festigkeiten und Korrosionsbeständigkeit führen sollen.

Gelöst wird diese Aufgabe durch die Verwendung eines homogenen Graphitgemisches, nämlich eines Flockengraphitgemisches aus mindestens zwei bezüglich eines Korngrößenparameters unterschiedlichen Flockengraphiten, insbesondere aus natürlichen Vorkommen, wobei die reversible Wärmedehnung des Graphitgemisches aus der Differenz des mit der reversiblen Wärmedehnung korrelierenden Korngrößenparameters der beiden Graphite resultiert. Dabei werden die mindestens beiden Flockengraphite ausgewählt aufgrund jeweils eines Formfaktors, der für den jeweiligen Graphit - im Folgenden auch Graphitsorte genannt - vorher ermittelt worden ist.

Im Rahmen der Erfindung konnte festgestellt werden, dass die ermittelte maximale oder mittlere Korngröße oder andere bestimmte Korngrößen einer Graphitsorte nicht geeignet sind, mit der reversiblen Wärmedehnung zu korrelieren, so dass mit einem Gemisch aus mindestens zwei Graphitsorten unterschiedlicher Korngrößen die reversible Wärmedehnung des Gemisches nicht ohne weiteres steuerbar ist. Es hat sich gezeigt, dass nicht jede feinteiligere oder gröbere Graphitsorte gleichermaßen die reversible Wärmedehnung einer anderen Graphitsorte beeinflusst, weil auch die reversible Wärmedehnung des Graphits nicht ausschließlich mit seiner Feinheit korreliert.

In überraschender Weise wurde gefunden, dass jeweils ein bestimmbarer Formfaktor einer Graphitsorte mit deren reversiblen Wärmedehnung korreliert. Der Formfaktor errechnet sich aus einer durch eine Siebanalyse ermittelten bestimmten Korngröße und einem Mittelwert c, errechnet aus einer optischen Messung der Dicke einer Vielzahl von Flocken der Flockengraphitsorte. Die Anzahl der dabei zu vermessenden Flocken ergibt sich z. B. aus statistischen Vorgaben, die der Fachmann kennt und z. B. der Norm ASTM E112 zu entnehmen sind.

Der Formfaktor FF errechnet sich somit aus der folgenden Formel:

$$FF = \frac{\text{Korngröße in µm einer bestimmten Graphitmenge, die ein bestimmtes Sieb passiert } (d_x\text{-Wert})}{\text{gemittelte Dicke c in µm aus einer optischen Vermessung mindestens einer rasterelektronenmikroskopischen Aufnahme (REM-Aufnahme)}}$$

Erfindungsgemäß wird für eine erste Graphitsorte durch Siebung das Sieb ermittelt, bei dem 90 Gew.-% der Graphitsorte das Sieb passieren ($d_{90}$-Wert). Dieser $d_{90}$-Wert ergibt z. B. eine Korngröße von 200 $\mu$m. Durch eine optische Auswertung von mindestens einer REM-Aufnahme der Graphitsorte wird die durchschnittliche Dicke c (der Mittelwert) durch die Messung der Dicke einer Vielzahl von Flocken bestimmt, mit z. B. 10 $\mu$m. Daraus ergibt sich der folgende Wert für den Formfaktor FF dieser ersten Graphitsorte mit

$$FF = \frac{d_{90}\text{-Wert } [\mu m]}{c \, [\mu m]} = \frac{200}{10} = 20$$

Wird für eine zweite Graphitsorte ein höherer Wert für den Formfaktor aus deren $d_{90}$-Wert und gemittelter Dicke c ermittelt, dann kann mit dieser Graphitsorte durch Mischung mit der ersten Graphitsorte die reversible Wärmedehnung der ersten Graphitsorte je nach Zusatzmenge im Gemisch mehr oder weniger gesenkt werden.

Denn es konnte im Rahmen der Erfindung erst festgestellt werden, dass die reversible Wärmedehnung einer Graphitsorte mit ihrem Formfaktor korreliert, indem bei einem relativ niedrigen Formfaktor einer Graphitsorte eine relativ hohe reversible Wärmedehnung und bei einem relativ hohen Formfaktor einer Graphitsorte eine relativ niedrige reversible Wärmedehnung vorliegt.

Die Differenz zwischen zwei Formfaktoren in einem Graphitsortengemisch beträgt erfindungsgemäß mindestens 10, insbesondere mindestens 50, vorzugsweise mindestens 80.

Die zugemischte Menge der anderen Graphitsorte, der Zusatzgraphitsorte, richtet sich nach der Höhe der gewünschten Reduzierung der reversiblen Wärmedehnung der zu verändernden Graphitsorte, die ohne beachtlichen Einfluss auf andere Eigenschaften des jeweiligen, eine bestimmte Graphitmenge enthaltenden feuerfesten Erzeugnisses ist, in welchem erfindungsgemäß nunmehr ein Graphitgemisch enthalten ist, das eine reduzierte reversible Wärmedehnung entsprechend der Zusatzgraphitsortenmenge aufweist. Die zugegebene Menge der Zusatzgraphitsorte beträgt erfindungsgemäß < 50 Gew.-% und minimal 3 Gew.-% zum Graphitgemisch und ist nicht abhängig von der reversiblen Wärmedehnung des feuerfesten Erzeugnisses, die durch den Graphitgemischzusatz beeinflusst wird, weil die Absenkung der reversiblen Wärmedehnung des feuerfesten Erzeugnisses lediglich auf der reversiblen Wärmedehnung des Graphitgemisches beruht.

Das Folgende verdeutlicht die Unbrauchbarkeit von lediglich Siebdurchgangswerten $d_x$. Eine auf dem Markt erhältliche Graphitsorte wies einen $d_{90}$-Wert von 30 $\mu m$ und einen c-Wert von 0,4 $\mu m$ auf. Eine andere Graphitsorte hatte einen $d_{90}$-Wert von 154 $\mu m$ und einen c-Wert von 2,0 $\mu m$. Bei beiden Graphitsorten errechneten sich beieinander liegende Formfaktoren von 75 und 77, d. h. beide Graphitsorten weisen bezüglich der möglichen Senkung der reversiblen Wärmedehnung die gleichen Wirkungen bezüglich des oben errechneten Formfaktors von 20 auf, obwohl die $d_{90}$-Werte und die c-Werte weit auseinander liegen.

Anhand der Zeichnung wird die Erfindung im Folgenden beispielhaft näher erläutert. Es zeigen:

Fig. 1 eine rasterelektronenmikroskopische Aufnahme (REM-Aufnahme) einer auf dem Markt erhältlichen Flockengraphitsorte mit Angaben von einigen optisch gemessenen Flockendicken;

Fig. 2 eine grafische Abbildung der Korrelation zwischen dem Wärmeausdehnungskoeffizienten und dem Formfaktor von verschiedenen Graphitsorten bei dem jeweiligen $d_{90}$-Wert.

Die reversible Wärmedehnung bzw. der Wärmeausdehnungskoeffizient einer Graphitpulversorte wird z. B. ermittelt, indem ein kaltisostatisch gepresster Graphitprobekörper hergestellt wird und dann die Wärmedehnung gemessen wird.

Dazu wird eine Mischung des Graphits mit einem Novolak-Pulverharz plus Harzhärter z. B. Hexamethylentetramin erstellt, und zwar aus 95 Ma.% Graphit und 5 Ma.% Harz einschließlich 10 Ma.% Härter, bezogen auf das Harz. Die Mischung erfolgt in einem Intensivmischer (z. B. Eirichgegenstrommischer; 4 min bei 1500 U/min. Danach wird die Rohmischung in eine Latexform eingefüllt, die Form mit einem Stopfen mit Ventil verschlossen, und die eingefüllte Rohmischung mittels Vakuumpumpe evakuiert. Es erfolgt anschließend ein kaltisostatisches Pressen und ein Aushärten des Formkörpers für 2 h bei 200 °C. Aus dem gehärteten Formkörper wird anschließend ein Zylinder ausgebohrt und gesägt mit den Abmessungen d = 40 mm; h = 50 mm.

Zur Bestimmung der Wärmedehnung am Graphitprobekörper wird der Graphitzylinder in eine Messkapsel eingebracht, die gefüllt ist mit Petrolkoks zum Schutz vor Abbrand des Kohlenstoffs, und für die Messung der Wärmedehnung ein Haubenofen z. B. der Firma Netzsch verwendet. Die präparierte Messkapsel wird in den Haubenofen eingebaut und eine Auflast von 0,02 MPa aufgebracht und der Probekörper bis 1500 °C aufgeheizt. Dabei wird die Wärmedehnung ermittelt mit einer aufgezeichneten Dehnungskurve. Die Berechnung des Wärmeausdehnungskoeffizienten $\alpha$ erfolgt dann aus dem Anstieg der Dehnungskurve in Abhängigkeit von der Temperatur, ermittelt in Anlehnung an DIN-EN 993-19.

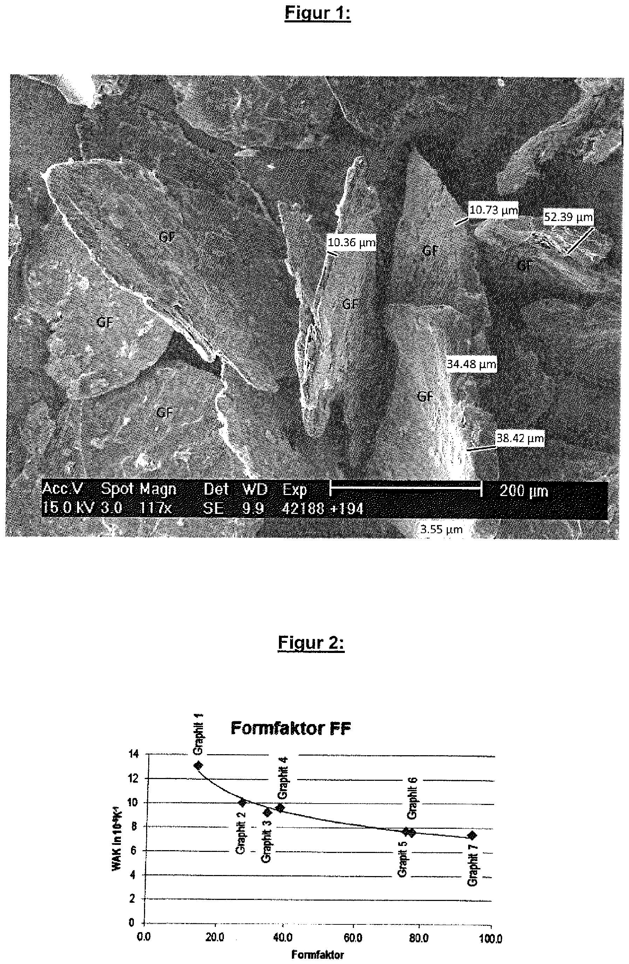

Die REM-Aufnahme (Fig. 1) zeigt mehrere Graphitflocken einer auf dem Markt befindlichen Flockengraphitsorte, von denen einige mit "GF" beschriftet sind. Außerdem ist bei mehreren Graphitflocken die optisch analog ASTM E 112 bestimmte Dicke angegeben mit, wobei die gemessene Stelle mit einem Strich gekennzeichnet ist. Der Maßstab der REM-Aufnahme ist am Fuß der Aufnahme mit 200 $\mu$m angegeben. Aus den Dickenmessungen ergibt sich eine gemittelte Dicke c von aufgerundet 25 $\mu$m. Die Siebanalyse dieser Graphitsorte ergab einen $d_{90}$-Wert von 400 $\mu$m, woraus ein Formfaktor FF = 16 resultiert.

Eine andere auf dem Markt befindliche Flockengraphitsorte wurde gleichermaßen analysiert und ergab einen Formenfaktor von FF = 94.

Ein Gemisch aus 80 Gew.-% der ersten Flockengraphitsorte und 20 Gew.-% der zweiten Flockengewichtsgraphitsorte ergab einen WAK 10,2 $\times$ 10$^{-6}$ K$^{-1}$. Ein Gemisch aus 90 Gew.-% der ersten Flockengraphitsorte und 10 Gew.-% der zweiten Flockengraphitsorte ergab einen WAK 11,9 $\times$ 10$^{-6}$ K$^{-1}$. Ein Gemisch aus 70 Gew.-% der ersten Flockengraphitsorte und 30 Gew.-% der zweiten Flockengraphitsorte ergab einen WAK 8,5 $\times$ 10$^{-6}$ K$^{-1}$.

Dieses Beispiel verdeutlicht, dass der Wärmeausdehnungskoeffizient und damit die reversible Wärmedehnung einer Graphitsorte über den Formfaktor FF gezielt verändert werden kann.

Fig. 2 zeigt die Korrelation des Wärmeausdehnungskoeffizienten verschiedener Flockengraphitsorten zum Formfaktor der Graphitsorten, wobei sich die Werte auf einer nur leicht durchgebogenen Verbindungslinie befinden. Dargestellt ist die Korrelation mit $d_{90}$-Werten der Flockengraphitsorten. Gleiche und brauchbare Korrelationslinien ergeben sich mit anderen $d_x$-Werten bis zu z. B. $d_{50}$-Werten oder x-Werten über 90. Je höher dieser Durchgangswert liegt, desto genauer ist die Korrelation. Der $d_x$-Wert sollte deshalb zweckmäßigerweise zwischen $d_{50}$ und $d_{95}$ liegen.

Erfindungsgemäß wird für die zu analysierenden Flockengraphitsorten der $d_{90}$-Wert (x = 90) verwendet und anhand des errechneten Formfaktors die Zusatzgraphitsorte bzw. die Zusatzgraphitsorten ausgewählt, mit denen der Wärmeausdehnungskoeffizient einer hauptsächlich verwendeten Graphitsorte durch Zumischen einer Zusatzgraphitsorte deutlich gesenkt werden kann.

Zweckmäßig ist eine Siebung nach ASTM E11-87 bzw. ISO 565.

Das erfindungsgemäße Verfahren zur Senkung der reversiblen Wärmedehnung ist besonders effektiv anwendbar auf reine Graphiterzeugnisse, insbesondere reine feuerfeste Graphiterzeugnisse, die hauptsächlich aus Graphit bestehen, wie Tiegel, Graphitblöcke sowie andere Graphitbauteile, weil durch erfindungsgemäße Mischung von mindestens zwei verschiedenen Flockengraphitsorten, z. B. aus unterschiedlichen Lagerstätten stammend, Flockengraphite hergestellt werden können mit deutlich veränderter reversibler Wärmedehnung. Dies macht z. B. Sinn, wenn man lediglich die reversible Wärmedehnung der einen Graphitsorte verändern will und die anderen ursprünglichen Eigenschaften des Graphiterzeugnisses erhalten bleiben sollen.

Eine Anwendung der erfindungsgemäßen gezielten und wirksamen Änderung der reversiblen Wärmedehnung einer Graphitsorte durch Zumischen einer über den Formfaktor dafür geeignet festgestellten, anderen Flockengraphitsorte ist für alle bekannten graphithaltigen, feuerfesten Erzeugnisse und andere Graphiterzeugnisse möglich. In allen graphithaltigen feuerfesten Erzeugnissen beeinflusst der Graphit die reversible Wärmedehnung grundsätzlich wegen seiner unterschiedlichen reversiblen Wärmedehnung im Vergleich zur Wärmedehnung des feuerfesten Werkstoffes. Zudem besteht eine Abhängigkeit von der Graphitmenge im feuerfesten Erzeugnis, wobei aber unterschiedliche Graphitmengen nicht nur unterschiedliche reversible Wärmedehnungen verursachen, sondern auch andere wesentliche Eigenschaften wie Kaltdruckfestigkeit, Kaltbiegefestigkeit, E-Modul und Temperaturwechselbeständigkeit verändern. Die vorliegende Erfindung schafft Abhilfe, indem nunmehr Graphitgemische als Graphitzusatz in gleicher Menge verwendet werden können, die lediglich die reversible Wärmedehnung verändern, nicht aber die anderen Eigenschaften in einem beachtlichen bzw. erheblichen Maße.

Im Folgenden wird stellvertretend für andere graphithaltige feuerfeste Erzeugnisse anhand eines Beispiels die Wirksamkeit von Graphitsortengemischen auf den Wärmeausdehnungskoeffizienten bei MgO-C-Steinen verdeutlicht.

Beispiel

Es wurden MgO-C-Steine mit einer Zusammensetzung gemäß Tabelle 1 wie üblich hergestellt, wobei der Standardgraphit 1 durch 20 Gew.-% der Graphitsorte 7 der in Fig. 2 bezeichneten Graphite ersetzt worden ist. Die Anteile in der folgenden Tabelle 1 sind Gewichtsprozente.

Tabelle 1

| Zusammensetzung der MgO-C-Steine | | |
|---|---|---|
| Rohstoff | Kornfraktionen [mm] | Anteil [%] |
| Fused MgO 97 | 2-4 | 34.00 |
| Fused MgO 97 | 1-2 | 22.00 |
| Fused MgO 97 | 0-1 | 20.00 |
| Fused MgO 97 | Mehl | 14.00 |

(fortgesetzt)

| Zusammensetzung der MgO-C-Steine | | |
|---|---|---|
| Rohstoff | Kornfraktionen [mm] | Anteil [%] |
| *Graphit 1* | | 8.00 |
| *Graphit 7* | | 2.00 |
| | | |
| | Menge % | |
| Phenolharz | 3.00 | |

Das Ergebnis zeigt die folgende Tabelle 2. Es ergab sich, wie aus der Tabelle 2 ersichtlich, dass der Wärmeausdehnungskoeffizient $\alpha$ von 8,72 auf 7,20 gesenkt werden konnte. Die Messung der thermischen Dehnung wurde in Anlehnung an DIN-EN 993-19 durchgeführt.

## Tabelle 2

## Eigenschaften der MgO-C-Steine

| | Standard mit Graphit 1 | MgO-C-Steine mit reduzierter Wärmedehnung |
|---|---|---|
| KDF in MPa | 31,9 | 34,6 |
| OP in % | 10,79 | 10,38 |
| $\rho_R$ in g/cm³ | 2,94 | 2,97 |
| $\alpha$ in $10^{-6} K^{-1}$ | 8,72 | 7,20 |

Es liegt auch im Rahmen der Erfindung, mindestens eine synthetische Graphitsorte, insbesondere als Zusatzgraphitsorte zu verwenden.

Ein erfindungsgemäßes Verfahren zur Reduzierung der reversiblen Wärmedehnung eines Graphit haltigen, insbesondere Naturgraphit haltigen, geformten, feuerfesten Erzeugnisses auf Basis feuerfester Werkstoffgranulate liegt vor, wenn die Granulatkörner der Werkstoffgranulate mit einem an sich bekannten Bindemittel und/oder einer keramischen Bindung zu einem Formkörper verfestigt sind und

- ein Gemisch aus mindestens zwei Flockengraphitsorten mit jeweils unterschiedlichen Wärmeausdehnungskoeffizienten verwendet worden ist, wobei
- eine Graphitsorte mengenmäßig überwiegt und die andere Graphitsorte als Zusatzgraphitsorte fungiert,
- sich die Graphitsorten in einem mit ihrem Wärmeausdehnungskoeffizienten korrelierenden Formfaktor FF unterscheiden, wobei die eine Graphitsorte einen niedrigeren Formfaktor FF aufweist und den überwiegenden Bestandteil des Graphitgemisches ausmacht und die andere Graphitsorte einen höheren Formfaktor FF aufweist, und wobei der Formfaktor FF jeder Graphitsorte vor dem Mischen ermittelt wird,
- jeder Formfaktor FF wie folgt ermittelt wird:

    Siebung der Graphitsorte und Ermittlung der Maschenweite in $\mu$m eines Siebes, das eine bestimmte prozentuale Durchgangsmenge x in Gew.-% durchlässt ($d_x$-Wert),

    Ermittlung der aus einer statistisch ausreichenden Anzahl von Messungen von Graphitflocken ermittelten gemittelten Dicke c mit einem optischen Verfahren aus mindestens einer REM-Aufnahme der jeweiligen Graphitsorte,

    Berechnung des Formfaktors FF mit der Formel:

$$FF = \frac{d_x\text{-Wert}}{c}$$

- die Maschenweite unter Verwendung eines x-Wertes von 90 ermittelt wird,
- Graphitsorten für ein Graphitgemisch verwendet werden, deren Differenz zwischen ihren Formfaktoren FF ($\Delta$ FF) mindestens 10, vorzugsweise mindestens 50, bevorzugt mindestens 85 beträgt,
- die Zusatzmenge der Graphitsorte mit dem größeren Formfaktor FF zur Graphitsorte mit dem kleineren Formfaktor FF oder umgekehrt, je nachdem welcher Wärmeausdehnungskoeffizient verändert werden soll, minimal 3 und < 50 Gew.-% beträgt und insbesondere zwischen 5 und 30 Gew.-% liegt,

Vorzugsweise werden zudem Graphitsorten mit Formfaktoren FF von mindestens 10, insbesondere von mindestens 50 und vorzugsweise von mindestens 100 zur Herstellung von Graphitgemischen verwendet.

Außerdem wird vorzugsweise für die feuerfesten Werkstoffgranulate mindestens ein feuerfester Werkstoff aus der folgenden Gruppe verwendet:

MgO, Al$_2$O$_3$, SiO$_2$, Zr$_2$O$_3$, CaO, Cr$_2$O$_3$ vorzugsweise aber MgO.

## Patentansprüche

1. Verfahren zur Reduzierung der reversiblen Wärmedehnung eines Graphit haltigen, feuerfesten geformten Erzeugnisses auf Basis feuerfester Werkstoffgranulate, wobei die Granulatkörner der Werkstoffgranulate mit einem an sich bekannten Bindemittel und/oder einer keramischen Bindung zu einem Formkörper verfestigt sind und wobei ein Gemenge zumindest aus mindestens einem feuerfesten Werkstoff, mindestens einem Bindemittel und einer bestimmten Menge Flockengraphit hergestellt und geformt wird, wobei

   als Graphit ein Graphitgemisch aus mindestens zwei Flockengraphitsorten verwendet wird, die sich mit ihrem Wärmeausdehnungskoeffizienten unterscheiden, wobei die eine Flockengraphitsorte mengenmäßig überwiegt im Graphitgemisch und die andere Flockengraphitsorte als Zusatzgraphitsorte fungiert,
   **dadurch gekennzeichnet, dass**
   sich die Flockengraphitsorten in einem mit ihrem Wärmeausdehnungskoeffizienten korrelierenden Formfaktor FF unterscheiden, wobei die eine, den überwiegenden Bestandteil des Graphitgemisches ausmachende, Flockengraphitsorte einen niedrigeren Formfaktor FF aufweist und die Zusatzgraphitsorte einen höheren Formfaktor FF aufweist, und wobei der Formfaktor FF jeder Flockengraphitsorte vor dem Mischen ermittelt wird, wobei jeder Formfaktor FF wie folgt ermittelt wird:

   - Siebung der Flockengraphitsorte und Ermittlung der Maschenweite in $\mu$m eines Siebes, das eine bestimmte prozentuale Durchgangsmenge x in Gew.-% durchlässt (d$_x$-Wert)
   - Ermittlung der aus einer statistisch ausreichenden Anzahl von Messungen von Graphitflocken ermittelten gemittelten Dicke c mit einem optischen Verfahren aus mindestens einer REM-Aufnahme der jeweiligen Flockengraphitsorte

   - Berechnung des Formfaktors FF mit der Formel: $$FF = \frac{d_x\text{-Wert}}{c}$$

   wobei die Maschenweite unter Verwendung eines x-Wertes von x= 90 ermittelt wird,
   wobei Flockengraphitsorten für das Graphitgemisch verwendet werden, deren Differenz zwischen ihren Formfaktoren FF ($\Delta$ FF) mindestens 10 beträgt, und
   wobei die Zusatzmenge der Zusatzgraphitsorte mit dem größeren Formfaktor FF zur Flockengraphitsorte mit dem kleineren Formfaktor FF minimal 3 und < 50 Gew.-% beträgt und insbesondere zwischen 3 und 30 Gew.-% liegt.

2. Verfahren nach Anspruch 1,
   **dadurch gekennzeichnet, dass**
   Flockengraphitsorten mit Formfaktoren FF von mindestens 10, insbesondere von mindestens 50, vorzugsweise von mindestens 100 zur Herstellung des Graphitgemisches verwendet werden.

3. Verfahren nach Anspruch 1 oder 2,
   **dadurch gekennzeichnet, dass**
   Flockengraphitsorten für das Graphitgemisch verwendet werden, deren Differenz zwischen ihren Formfaktoren FF ($\Delta$ FF) mindestens 50, insbesondere mindestens 85, beträgt.

**4.** Verfahren nach einem der vorhergehenden Ansprüche,

**dadurch gekennzeichnet, dass**
für die feuerfesten Werkstoffgranulate mindestens ein feuerfester Werkstoff aus der folgenden Gruppe verwendet wird:
MgO, $Al_2O_3$, $SiO_2$, $Zr_2O_3$, CaO, $Cr_2O_3$ vorzugsweise aber MgO verwendet wird.

**5.** Verfahren nach einem der vorhergehenden Ansprüche,
**dadurch gekennzeichnet, dass**
es sich bei den Flockengraphitsorten um Naturgraphit handelt.

**6.** Verfahren nach einem der vorhergehenden Ansprüche,
**dadurch gekennzeichnet, dass**
der Formfaktor FF der Naturgraphitsorten zwischen 5 und 200, insbesondere zwischen 10 und 100 liegt.


**Claims**

**1.** Method for reducing the reversible thermal expansion of a refractory molded product containing graphite on the basis of refractory material granulates, wherein the granulate grains of the material granulates are solidified to form a molded body, by a known binder and/or by a ceramic binding, and wherein a mixture of at least one refractory material, at least one binder, and a specific amount of flake graphite is produced and molded,

wherein
as the graphite, a mixture of at least two flake graphite types that differ in terms of their thermal expansion coefficient is used, wherein one flake graphite type predominates, in terms of amount, in the graphite mixture, and the other flake graphite type functions as an added graphite type, **characterized in that**
the flake graphite types differ in a form factor FF that correlates with their thermal expansion coefficient, wherein the one graphite type, which makes up the predominant component of the graphite mixture, has a lower form factor FF and the added graphite type has a higher form factor FF, and wherein the form factor FF of each flake graphite type is determined before mixing,
wherein each form factor FF is determined as follows:

- screening of the flake graphite type and determination of the mesh width in $\mu$m of a screen that allows a specific percentage amount x in wt.-% to pass through ($d_x$ value),
- determination of the averaged thickness c determined from a statistically sufficient number of measurements of graphite flakes, using an optical method, from at least one REM image of the respective flake graphite type,
- calculation of the form factor FF using the formula:

$$FF = \frac{d_x\ value}{c}$$

wherein the mesh width is determined using an x value of x = 90, wherein flake graphite types are used for the graphite mixture, with the difference between their form factors FF ($\Delta$ FF) amounting to at least 10, and wherein the amount of the added graphite type having the greater form factor FF added to the flake graphite type having the smaller form factor FF amounts to minimally 3 and < 50 wt.-%, and particularly lies between 3 and 30 wt.-%.

**2.** Method according to claim 1,
**characterized in that**
flake graphite types having form factors FF of at least 10, particularly of at least 50, preferably of at least 100 are used for the production of the graphite mixture.

**3.** Method according to claim 1 or 2,
**characterized in that**
flake graphite types are used for the graphite mixture, with the difference between their form factors FF ($\Delta$ FF)

amounting to at 50, and particularly to at least 85.

4. Method according to one of the previous claims ,

   **characterized in that**
   for the refractory material granulates, at least one refractory material from the following group is used:
   MgO, Al$_2$O$_3$, SiO$_2$, Zr$_2$O$_3$, CaO, Cr$_2$O$_3$, but preferably MgO is used.

5. Method according to one of the previous claims,
   **characterized in that**
   the flake graphite types pertain to natural graphite.

6. Method according to one of the previous claims,
   **characterized in that**
   the form factor FF of the natural graphite types lies between 5 and 200, particularly between 10 and 100.

**Revendications**

1. Procédé de réduction de la dilatation thermique réversible d'un produit façonné réfractaire, contenant du graphite sur la base de granulats de matériau réfractaires, dans lequel les grains des granulats de matériau sont agglomérés avec un liant connu en soi et/ou une liaison céramique en un corps façonné et dans lequel un mélange au moins d'au moins un matériau réfractaire, au moins un liant et une quantité déterminée de graphite en paillettes est fabriqué et façonné, dans lequel

   un mélange de graphite d'au moins deux sortes de graphite en paillettes est utilisé comme graphite, lesquels se distinguent par leurs coefficients de dilatation thermique, dans lequel l'une sorte de graphite en paillettes est quantitativement prépondérante dans le mélange de graphite et l'autre sorte de graphite de paillette fonctionne comme sorte de graphite supplémentaire,
   **caractérisé en ce que**
   les sortes de graphite en paillettes se distinguent dans un facteur de forme FF en corrélation avec leurs coefficients de dilatation thermique, dans lequel l'une sorte de graphite en paillettes représentant le constituant principal du mélange de graphite présente un facteur de forme inférieur FF et la sorte de graphite supplémentaire présente un facteur de forme supérieur FF, et dans lequel le facteur de forme FF de chaque sorte de graphite en paillettes est déterminé avant le mélange, dans lequel chaque facteur de forme FF est déterminé comme suit :

   - le tamisage de la sorte de graphite en paillettes et la détermination du maillage en $\mu$m d'un tamis qui laisse passer une quantité de passage en pourcentage déterminée x en % en poids (valeur d$_x$)
   - la détermination de l'épaisseur c en moyenne déterminée à partir d'un nombre suffisant de manière statistique de mesures de paillettes de graphite avec un procédé optique à partir d'un cliché REM de la sorte de graphite en paillettes respective,
   - le calcul du facteur de forme FF avec la formule : $$FF = \frac{valeur\ dx}{c}$$

   dans lequel le maillage est déterminé en utilisant une valeur x de x = 90,
   dans lequel des sortes de graphite en paillettes sont utilisées pour le mélange de graphite, dont la différence entre leurs facteurs de forme FF ($\Delta$ FF) s'élève au moins à 10, et
   dans lequel la quantité supplémentaire de la sorte de graphite supplémentaire avec le facteur de forme supérieur FF à la sorte de graphite en paillettes avec le facteur de forme FF inférieur est au minimum de 3 et < 50 % en poids et se situe en particulier entre 3 et 30 % en poids.

2. Procédé selon la revendication 1,
   **caractérisé en ce que**
   des sortes de graphite en paillettes avec des facteurs de forme FF d'au moins 10, en particulier d'au moins 50, de préférence d'au moins 100 sont utilisées pour la fabrication du mélange de graphite.

3. Procédé selon la revendication 1 ou 2,

**caractérisé en ce que**

des sortes de graphite en paillettes sont utilisées pour le mélange de graphite, dont la différence entre leurs facteurs de forme FF ($\Delta$ FF) s'élève au moins à 50, en particulier au moins à 85.

4. Procédé selon l'une des revendications précédentes,

   **caractérisé en ce que**

   pour les granulats de matériau réfractaires au moins un matériau réfractaire du groupe suivant est utilisé : MgO, $Al_2O_3$, $SiO_2$, $Zr_2O_3$, CaO, $Cr_2O_3$ mais de préférence du MgO est utilisé.

5. Procédé selon l'une des revendications précédentes,
   **caractérisé en ce que**
   il s'agit concernant les sortes de graphite en paillettes de graphite naturel.

6. Procédé selon l'une des revendications précédentes,
   **caractérisé en ce que**
   le facteur de forme FF des sortes de graphite naturel se situe entre 5 et 200, en particulier entre 10 et 100.

## Figur 1:

## Figur 2:

**IN DER BESCHREIBUNG AUFGEFÜHRTE DOKUMENTE**

**In der Beschreibung aufgeführte Patentdokumente**

- FR 2542309 A1

- WO 2011125536 A1

**In der Beschreibung aufgeführte Nicht-Patentliteratur**

- **SAKAGUCHI MASAYUKI et al.** Effect of Graphite Particle Size On Properties Of MgO-C-Bricks. *Taika-butsu Overseas,* 1993, vol. 13 (1), 27-29

- *Journal of Nuclear Materials,* 2013, vol. 436, 76-83